# EUROPÄISCHE PATENTSCHRIFT

(11) **EP 1 346 178 B1**
(45) Veröffentlichungstag und Bekanntmachung des Hinweises auf die Patenterteilung: **03.11.2004**
(21) Anmeldenummer: 01995700.0
(22) Anmeldetag: 20.12.2001
(51) Int. Cl.: F21S 8/00, F21S 8/02, F21V 8/00, E06B 3/66

(54) **SANDWICHARTIGES PLATTENELEMENT**
SANDWICH-LIKE PANEL ELEMENT
ELEMENT PANNEAU DE TYPE SANDWICH

(30) Priorität: 22.12.2000 DE 10064744; 06.04.2001 DE 10117104
(43) Veröffentlichungstag der Anmeldung: 24.09.2003
(73) Patentinhaber: Emde, Thomas, 60389 Frankfurt/Main (DE); Pohl, Heinrich Robert, 50769 Köln (DE)
(72) Erfinder: Emde, Thomas, 60389 Frankfurt/Main (DE); Pohl, Heinrich Robert, 50769 Köln (DE)
(74) Vertreter: Fritz, Edmund Lothar, Dipl.-Chem.
(86) Internationale Anmeldenummer: PCT/EP2001/015102
(87) Internationale Veröffentlichungsnummer: WO 2002/052192

(56) Entgegenhaltungen:
- EP-A- 0 199 233
- EP-A- 0 945 674
- DE-A- 3 801 989
- DE-A- 19 852 593
- DE-U- 29 510 238

## Beschreibung

Die vorliegende Erfindung betrifft ein sandwichärtiges Plattenelement umfassend wenigstens zwei weitgehend lichtdurchlässig ausgebildete Platten, im Zwischenraum zwischen den beiden Platten oder auf wenigstens einer der beiden Platter angeordnete Solarzellenelemente sowie eine Beleuchtungseinrichtung mit wenigstens einem Leuchtmittel welches Licht stirnseitig in wenigstens eine der Platten einstrahlt, wobei dieses Licht wenigstens teilweise etwa senkrecht zu dieser Einstrahlrichtung abgelenkt wird und über die Fläche wenigstens einer der Platten, welche lichtdurchlässig ausgebildet ist, abgegeben wird.

Ein gattungsgemäßes Plattenelement ist aus EP 0 199 233 bekannt.

Aus dem Stand der Technik sind beispielsweise im Bereich der Lichtreklamen beleuchtbare Plattenelemente bekannt, bei denen das Licht stirnseitig in eine Acrylplatte hinein eingestrahlt wird und dann die Platte, die an einer Fläche z. B. in einem Punktraster bedruckt ist, lichtstreuend wirkt, so dass das Licht senkrecht zur Einstrahlrichtung abgelenkt und über die Fläche der Platte ausgestrahlt wird. Bei diesen Plattenelementen tritt also das stirnseitig eingestrahlte Licht über die Kante in die Platte selbst ein und wird in der Platte umgelenkt und verlässt die Platte dann über die Fläche. Der Nachteil bei solchen Platten, die aus Acryl oder vergleichbaren Kunststoffen bestehen, liegt darin, dass diese aufgrund des Materialpreises relativ teuer sind. Dies führt zu erheblichen Einschränkungen hinsichtlich der Anwendungen solcher Platten. In der Regel werden die bekannten Platten daher für Werbedisplays und dergleichen eingesetzt, die insgesamt relativ kleine Flächen habe, so dass der Materialpreis der Acrylplatte weniger ins Gewicht fällt. Für großflächige Anwendungen kommen diese lichtstreuenden Acrylplatten dagegen aufgrund des hohen Materialpreises nicht in Betracht. Als Leuchtmittel werden bei diesen Acrylplatten in der Regel Leuchtstoffröhren verwendet, die das Licht stirnseitig in die Platte einstrahlen.

Im Bausektor sind großflächige Verkleidungen für Fassaden bekannt. Wenn man eine solche Gebäudefassade beleuchtbar ausgestalten will, so ist dies mit den herkömmlichen Mitteln recht aufwendig. Da die zuvor Genannten Acryl-Platten zu kostenintensiv sind. kommen sie z. B. für eine großflächige Verkleidung einer Gebäudefassade nicht in Betracht. Außerdem kommt als nachteilig hinzu, dass die herkömmlicherweise verwendeten Leuchtmittel in diesem Anwendungsbereich meist Leuchtstoffröhren sind, die nur eine begrenzte Lebensdauer haben. Daher müssen immer wieder einzelne Leuchtstoffröhren ausgewechselt werden, was bei einer großflächigen Gebäudefassade z. B. eines Hochhauses zu einem erheblichen Aufwand führt. Ein weiterer nachteiliger Aspekt bei den herkömmlichen Mitteln zur Schaffung beleuchteter Gebäudefassaden liegt in dem relativ hohen Energieverbrauch der vielen notwendigen Leuchtmittel, wie z. B. Leuchtstoffröhren.

Die Aufgabe der vorliegenden Erfindung besteht somit darin, ein sandwichartiges Plattenelement zu schaffen, welches beleuchtbar ist, dabei Licht über die Fläche abgibt, relativ kostengünstig herstellbar ist und mit geringem Energieverbrauch auskommt.

Die Lösung dieser Aufgabe liefert ein erfindungsgemäßes sandwichartiges Plattenelement der eingangs genannten Art mit den Merkmalen des Hauptanspruchs. Das erfindungsgemäße sandwichartige Plattenelement eignet sich insbesondere gut für die Herstellung großflächiger beleuchtbarer Gebäudefassaden, da es mit sehr geringem oder sogar völlig ohne Energieverbrauch auskommt. Die notwendige Versorgung der Leuchtmittel kann über die Solarzellenelemente erfolgen, die Teil des sandwichartigen Plattenelements sind. Durch die sandwichartigen Plattenelemente kann man Licht über die Fläche abgeben, ohne dass das Leuchtmittel den Betrachter blendet, wobei das Leuchtmittel sogar in der Regel vom Betrachter gar nicht wahrgenommen wird.

Das Licht wird in wenigstens eine Platte stirnseitig eingestrahlt und dieses Licht wird über die Fläche der Platte als Streulicht abgegeben. Die Platte kann dabei beispielsweise Teil einer Verbundplatte nach Art eines Verbundglases sein. Man kann alternativ dazu auch mehrere Platten verwenden, die teilweise voneinander beabstandet sind und in dem Zwischenraum zwischen zweier dieser Platten Solarzellenelemente anordnen. Wenigstens eine der verwendeten Platten besteht in jedem Fall aus einem lichtdurchlässigen Material und auf dieser Platte, vorzugsweise im Verbund mit dieser Platte sind Solarzellenelemente angebracht oder die Solarzellenelemente befinden sich in einer scheibenförmigen Platte im Verbund mit einer oder mehreren weiteren Platten. Die auf eine Platte aufgebrachten oder in einer Platte untergebrachten Solarzellenelemente erfüllen die zusätzliche Aufgabe der Erzeugung des für den Betrieb der Leuchtmittel zur Beleuchtung des lichtdurchlässigen Plattenelements, in das das Licht stirnseitig eingestrahlt wird, notwendigen Stroms.

Die erste lichtdurchlässige Platte kann beispielsweise aus Glas oder gegebenenfalls auch aus Kunststoffglas bestehen und wird so präpariert, dass sie lichtstreuend wirkt. Glas bietet sich dabei an für Anwendungen im Fassadenbereich, wo große Flächen zu verkleiden sind, da es ein relativ kostengünstiges Grundmaterial ist. Die lichtstreuende Wirkung kann man erzeugen, indem man die lichtdurchlässige Platte wenigstens einseitig bedruckt, sandstrahlt, ätzt, beschichtet oder beklebt und zwar vorzugsweise in einem entsprechenden Raster, beispielsweise in einem Punktraster oder Strichraster, um die gewünschte lichtstreuende Wirkung zu erzielen. Das genannte Raster insbesondere Punktraster oder Strichraster kann aus sehr kleinen Punkten oder Strichen bestehen, die vom Betrachter praktisch nicht wahrgenommen werden und die den Lichtdurchtritt durch die lichtdurchlässige Platte kaum behindern. Dadurch kann das durch die lichtdurchlässige Platte durchfallende Licht auf die die Solarzellenelemente enthaltende zweite Platte praktisch ungehindert einstrahlen. Das durch Bedruckung oder eine der anderen genannten Methoden erzeugte Raster kann ein sich über die Fläche der Platte änderndes Rastermuster sein, welches beispielsweise in der Dichte oder Größe der Punkte oder Striche jeweils vom Rand der Platte zur Plattenmitte hin über die Fläche gesehen zunimmt. Dadurch erzielt man einen besseren lichtstreuenden Effekt in die gewünschte Richtung.

Eine weitere Überlegung im Rahmen der vorliegenden Erfindung ist es, einen geringeren Energieverbrauch anzustreben als bei Verwendung der herkömmlichen Leuchtmittel wie Leuchtstoffröhren oder dergleichen. Im Rahmen der vorliegenden Erfindung werden daher vorzugsweise relativ kleine energiesparende Leuchtmittel mit vergleichsweise hoher Lichtausbeute eingesetzt, wie z. B. eine Anzahl LED's, SMD's, andere Leuchtdioden oder dergleichen. Man kann beispielsweise eine Anzahl solcher LED's verwenden, die auf einer streifenförmigen Anordnung angebracht sind, die sich stirnseitig an einer Platte befindet, so dass das Licht in diese Platte eingestrahlt wird. Eine solche streifenförmige Anordnung kann man an der Rahmenkonstruktion unterbringen, beispielsweise in einer Nut oder dergleichen, so dass die Leuchtmittel für den Betrachter bei gewöhnlicher Betrachtung, d. h., wenn er vor die Platte sieht, nicht einsehbar sind. Dies erzeugt einen besonders angenehmen Beleuchtungseffekt, da der Betrachter nicht nur nicht geblendet wird, sondern auch das Leuchtmittel praktisch nicht wahrnimmt.

Man kann die Leuchtmittel auch auf einer Platine oder dergleichen unterbringen, die stirnseitig vor einer der Platten angebracht wird, so dass das Licht in diese Platte einstrahlt. Auf einer solchen Platine kann eine Anzahl relativ klein dimensionierter Leuchtdioden untergebracht sein. Man kann derartige Leuchtmittel auch in eine Art lichtdurchlässigen oder im wesentlichen lichtdurchlässigen durchsichtigen Kunststoffblock oder in einer quaderförmigen Kunststoffleiste eingießen. Dies hat zum einen den Vorteil, dass die Leuchtmittel dann dort feuchtigkeitsgeschützt untergebracht sind.

Außerdem ist ein gegebenenfalls notwendiger Austausch defekter Leuchtmittel wesentlich einfacher von der Handhabung möglich, da man dann die Kunststoffleiste mit den eingegossenen Leuchtmitteln bzw. die Platine vollständig austauschen kann. In einer solchen Kunststoffleiste bzw, an einer solchen Platine sind in der Regel auch die erforderlichen Zuleitungen für den Betrieb und gegebenenfalls die Steuerung der Leuchtmittel vorhanden, wobei Leiterbahnen zu den einzelnen Leuchtmitteln führen können. Diese Leuchtmittel, vorzugsweise Leuchtdioden können in Reihen und gegebenenfalls einzelnen Gruppen angeordnet sein.

Die genannten Leuchtmittel wie insbesondere LED's und SMD's haben weiterhin den Vorteil, dass sie sich mit vergleichsweise geringem Aufwand so steuern lassen, dass sie sich z. B. in der Helligkeit an die Helligkeit der Umgebung anpassen. Darüber hinaus lassen diese Leuchtmittel vielfältige andere Steuermöglichkeiten zu.

Vorzugsweise sind im Rahmen der vorliegenden Erfindung Steuereinrichtungen vorgesehen, die ein derartiges Steuern des Leuchtmittels ermöglichen, dass je nach Bedarf entweder weißes oder beliebiges farbiges Licht abgegeben wird. Weiterhin sind vorzugsweise Steuereinrichtungen sowie Sensoren vorgesehen, die eine Steuerung des bzw. der Leuchtmittel in Abhängigkeit vom einfallenden Tageslicht erzielen. Weiterhin kann man eine Steuerung in Abhängigkeit von einer in der Nähe anwesenden Person vorsehen, wozu man beispielsweise einen Bewegungsmelder verwendet. Für die Steuerung in Abhängigkeit vom einfallenden Tageslicht können Photozellen oder ähnliches eingesetzt werden. Außerdem kann man alternativ dazu oder gleichzeitig eine Steuerung nach einem beliebigen vorgegebenen Programm bewirken.

Vorzugsweise sind bei dem erfindungsgemäßen sandwichartigen Plattenelement weiterhin Einrichtungen für die Befestigung des Plattenelements an einer Wand, an einer Decke oder auf einem Boden vorgesehen. Eine der genannten bevorzugten Varianten bietet z. B. die Möglichkeit, ein solches sandwichartiges Plattenelement durch Ankleben, Anschrauben oder anders an einer Wand oder Fassade eines Gebäudes anzubringen, um dadurch die Beleuchtung der Wand/Fassade zu bewerkstelligen. Die Verwendung der sandwichartigen Plattenelemente hat den wesentlichen Vorteil, dass die konkrete Leuchte bzw. das Leuchtmittel für den Betrachter praktisch nicht wahrgenommen werden. Vielmehr hat dieser den Eindruck, dass die Fassade durch quasi selbstleuchtende Platten vertäfelt ist. Da sich die genannten Leuchtmittel wie LED's, SMD's etc. im sogenannten RGB-Modus (rote, grüne und blaue Leuchtmittel) steuern lassen, kann man die sandwichartigen Plattenelemente in beliebigen Farben erscheinen lassen und damit neben der eigentlichen Beleuchtungsfunktion oder alternativ dazu eine Effektbeleuchtung erzeugen, z. B. auch mit farbigen Plattenmustern. Die Änderung der abgegebenen Lichtfarbe erfordert dabei in vorteilhafter Weise keinen Wechsel des Leuchtmittels sondern wird nur durch die Steuerung bewirkt, wobei die Steuerung entweder vom Benutzer entsprechend dem jeweiligen Bedarf betätigt wird oder aber eine vorgegebene Programmsteuerung eingespeichert ist.

Durch eine z. B. tageslichtabhängige Steuerung kann man die Leuchtmittel mit allmählich zunehmender Lichtstärke einschalten, so dass auch dann der Betrachter den Übergang vom Tageslicht zum Kunstlicht kaum wahrnimmt.

Die sandwichartigen Plattenelemente gemäß der vorliegenden Erfindung können Teil einer Fassade oder Wand eines Gebäudes sein, d.h. dass sie entweder selbst einen Teil der Gebäudewand bilden oder als ein eine Gebäudewand verkleidendes Fassadenbauteil quasi vor die Gebäudewand gesetzt und dort befestigt werden. Gegenstand der vorliegenden Erfindung ist auch eine Gebäudefassade oder Gebäudewand, welche wenigstens ein sandwichartiges Plattenelement der erfindungsgemäßen Art mit den zuvor geschilderten Merkmalen umfasst.

Die sandwichartigen Plattenelemente gemäß der vorliegenden Erfindung können auch so ausgebildet sein, dass nicht nur wenigstens eine der Platten lichtdurchlässig ausgebildet ist, sondern dass auch wenigstens eine weitere Platte, die wenigstens teilweise aus Solarzellenelementen besteht, ebenfalls zumindest teilweise lichtdurchlässig ausgebildet ist. Es sind heute Solarpaneele bekannt, bei denen die das Licht absorbierenden Solarzellenelemente nicht schwarz sind, sondern opak oder hellfarbig, so dass die Solarzellenelemente zwar eingestrahltes Licht zumindest teilweise absorbieren, das Licht aber auch teilweise durch das aus Solarzellenelementen bestehende Solarpaneel im wesentlichen ohne Richtungsänderung hindurchfällt. Derartige teilweise lichtdurchlässige Platten mit Solarzellenelementen lassen sich als zweite Platte für ein sandwichartiges Plattenelement gemäß der vorliegenden Erfindung einsetzen. Ein solcher Einsatz ist insbesondere sinnvoll für Lichtdecken in Gebäuden oder auch Gebäudewände, bei denen tagsüber ein Durchtreten von natürlichem Tageslicht erwünscht ist. In diesem Fall kann man durch die Verwendung sandwichartiger Plattenelemente für z.B. eine Lichtdecke drei Funktionen erfüllen. Tagsüber sind diese mindestens teilweise für das Tageslicht durchlässig, da mindestens eine der Platten des sandwichartigen Plattenelements ohnehin lichtdurchlässig ist und die die Solarzellenelemente aufweisende Platte ebenfalls mindestens teilweise lichtdurchlässig ist. Damit kann man das Tageslicht zur Aufhellung des Gebäudes nutzen. Gleichzeitig wird durch die Sonneneinstrahlung tagsüber mindestens teilweise Sonnenenergie absorbiert, in Solarstrom umgewandelt und gespeichert. Man kann auch direkt die von den Solarzellenelementen erzeugte Energie als Strom in das Netz einspeisen. Abends kann man dann gegebenenfalls allmählich, um einen gleitenden Übergang von Tageslicht zu Kunstlicht zu erzielen, die Leuchtmittel des sandwichartigen Plattenelements einschalten, wobei man für den Betrieb der Leuchtmittel, die wenig Energie verbrauchen, den zuvor tagsüber gespeicherten Solarstrom nutzen kann. Lichtdecken oder Gebäudewände, die quasi gläsern wirken und sandwichartige Plattenelemente der vorgenannten Art umfassen, sind ebenfalls Gegenstand der vorliegenden Erfindung.

Die Plattenelemente gemäß der vorliegenden Erfindung können wie bereits erwähnt wurde Verbundplattenelemente sein oder wie Isolierglasscheiben aufgebaut sein. Es ist aber auch möglich, mit einfachen Platten aus Glas oder Kunststoffglas zu arbeiten, in die dann das Licht stirnseitig in der zuvor beschriebenen Weise eingestrahlt wird, die zur Erzeugung des Streulichts mindestens einseitig an der Oberfläche bedruckt, geätzt etc. sind und auf die dann einseitig Solarzellenelemente aufgebracht sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Ansicht einer Fassade eines Gebäudes, welche durch sandwichartige Plattenelemente gemäß der Erfindung verkleidet ist;
- Fig. 2: eine Schnittansicht eines beispielhaften sandwichartigen Plattenelements gemäß einer ersten Variante der Erfindung;
- Fig. 3: eine Schnittansicht eines beispielhaften sandwichartigen Plattenelements gemäß einer weiteren alternativen Variante der Erfindung.

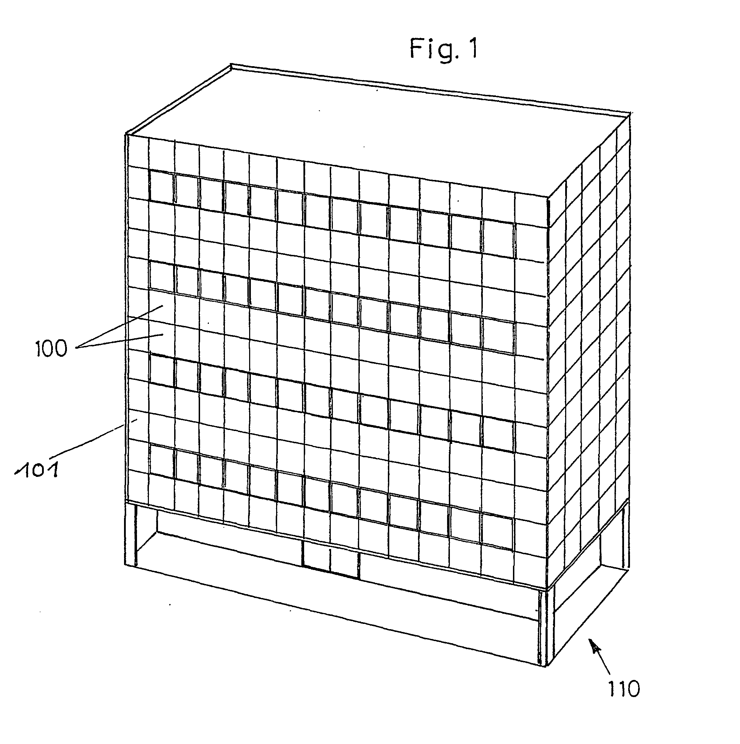

Zunächst wird auf Fig. 1 Bezug genommen. Die Darstellung zeigt beispielhaft die Fassade 101 eines hochhausartigen Gebäudes 110, welches großflächig durch sandwichartige Plattenelemente 100 mindestens in Teilbereichen verkleidet ist. Diese erfindungsgemäßen sandwichartigen Plattenelemente 100 umfassen Solarzellenelemente und sind daher in der Lage tagsüber einfallendes Licht in Strom umzuwandeln, wobei mittels dieses so erzeugten Stroms nachts die Leuchtmittel gespeist werden, über die die sandwichartigen Plattenelemente beleuchtet werden. Somit schafft man die Möglichkeit einer insgesamt oder in Teilbereichen beleuchtbaren Fassade, die mit einer sehr geringen oder völlig ohne Fremdenergie auskommt. Das Licht wird über geeignete Leuchtmittel stirnseitig in eine der Platten des sandwichartigen Plattenelements 100 eingespeist und z. B. durch eine rasterartige Bedruckung der Fläche des Plattenelements an mindestens einer Seite umgelenkt und dann über die Fläche des Plattenelements im wesentlichen rechtwinklig zur Einstrahlrichtung als Streulicht abgegeben. Dadurch, dass die Leuchtmittel in der Regel für den Betrachter nicht unmittelbar einsehbar sind, wird eine Blendwirkung vermieden. Wenn die Beleuchtung ausgeschaltet ist, kann eine Durchsicht durch das sandwichartige Plattenelement möglich sein, wenn man geeignete lichtdurchlässige Solarzellenelemente wählt. In diesem Fall kann man die sandwichartigen Plattenelemente nicht nur als Verkleidungselemente für die Fassade verwenden, sondern auch als Fensterelemente, durch die tagsüber Licht in das Gebäude einfällt. Bei dieser Variante ermöglicht die Erfindung folglich drei Funktionen, nämlich erstens den Durchtritt von natürlichem Licht durch die sandwichartigen Plattenelemente (Fensterfunktion), zweitens die Möglichkeit flächig beleuchtete Plattenelemente zu schaffen, die gegebenenfalls farbig beleuchtet sind und drittens wird die von den sandwichartigen Plattenelementen abgedeckte Fläche des Gebäudes für das Einfangen von Sonnenlicht und zur Erzeugung von Strom über die Solarzellenelemente genutzt.

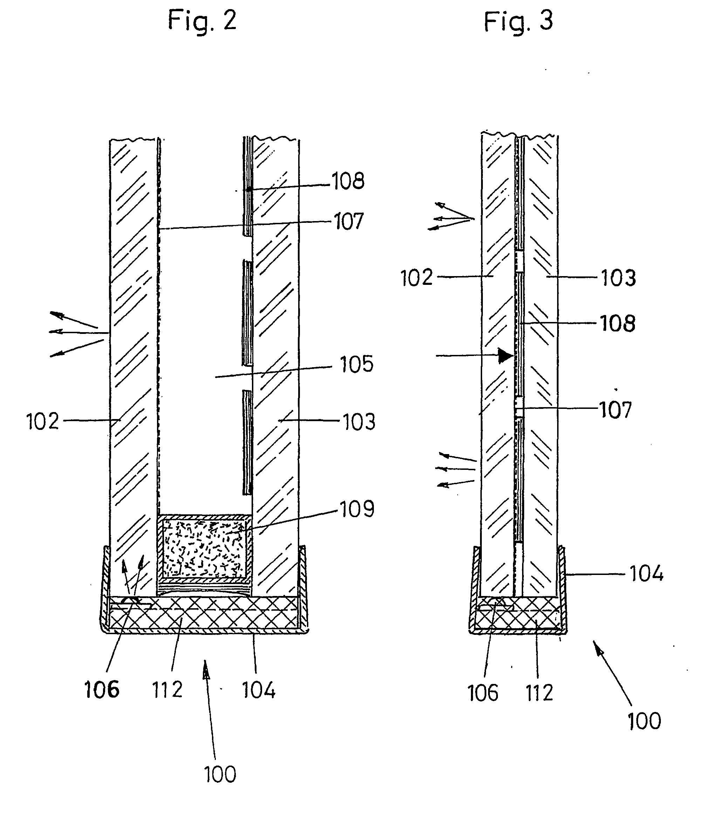

Der genauere Aufbau und die Funktionsweise eines beispielhaften erfindungsgemäßen sandwichartigen Plattenelements 100 geht aus der Darstellung gemäß Figur 2 hervor. In diesem Fall ist das sandwichartige Plattenelement wie ein Isolierglasfenster aufgebaut mit einer etwa U-förmigen Rahmenkonstruktion 104, die zwei Glasplatten 102, 103 randseitig einfasst. Die beiden Glasplatten 102, 103 sind wie bei einem Isolierglasfenster voneinander beabstandet, so dass sich ein Zwischenraum 105 zwischen den beiden Glasplatten 102, 103 ergibt. Der Abstand zwischen den beiden Glasplatten 102, 103 wird durch eine Abstandskonstruktion 109 definiert.

Wie man weiterhin aus der Zeichnung erkennt, sind stirnseitig im Bereich der Rahmenkonstruktion Leuchtdioden 106 untergebracht, die in eine Art Platine 112 aus einem transparenten Material eingegossen sein können. Die Leuchtdioden (LED's) 106 befinden sich in dem Ausführungsbeispiel stirnseitig vor der lichtdurchlässigen Platte 102 und sind in einer Reihe (in Richtung der Tiefe der Zeichenebene) angeordnet. Es kann eine relativ hohe Stückzahl solcher Leuchtdioden verwendet werden, je nach den Anforderungen an die Beleuchtung, beispielsweise bis zu mehrere hundert Leuchtmittel 106 pro laufendem Meter der lichtdurchlässigen Platte 102. Die lichtdurchlässige Platte 102 ist in einem Punktraster 107 einseitig so bedruckt, dass das Licht, welches stirnseitig über die LED's 106 in die Glasplatte 102 eingespeist wird, umgelenkt wird und als Streulicht nach außen über die Fläche der Glasplatte 102 abgegeben wird.

Auf die innenseite der Glasplatte 103 sind außerdem Solarzellenelemente 108 aufgebracht, so dass das durch die Glasplatte 102 durchfallende natürliche Licht tagsüber auf die Solarzellenelemente 108 fällt und dort in elektrische Energie umgewandelt wird, mittels derer die Leuchtmittel 106 mit Energie gespeist werden können.

Figur 3 zeigt eine weitere alternative Ausführungsvariante eines beispielhaften sandwichartigen Plattenelements 100 gemäß der Erfindung im Längsschnitt. Bei dieser Ausführungsvariante ist das sandwichartige Plattenelement 100 ein Verbundelement im wesentlichen bestehend aus zwei Glasplatten 102, 103 oder Kunststoffglasplatten, die weitgehend lichtdurchlässig sind. Beispielsweise kann eine der Platten des Verbundelements aus Weißglas bestehen und eine aus Floatglas. Zwischen diesen beiden Platten 102, 103 sind Solarzellenelemente 108 eingebettet. Das ganze Verbundelement ist stirnseitig durch eine Rahmenkonstruktion 104 mit einem beispielsweise etwa U-förmigen Rahmenprofil eingefasst. Vor der Stirnseite der beiden Glasplatten 102, 103 befindet sich wiederum eine Art Platine aus transparentem Material, in welche LED's 106 eingegossen sind, die ihr Licht in die Stirnseite der Glasplatte 102 einstrahlen. Eine der Flächen, beispielsweise die Innenfläche der Glasplatte 102 ist wiederum mit einem Punktraster 107 oder dergleichen bedruckt oder in einem entsprechenden Raster geätzt oder beschichtet oder weist im Inneren eine Fehlstruktur auf, wodurch das Licht, welches stirnseitig in die Glasplatte eingestrahlt wird, im wesentlichen rechtwinklig umgelenkt wird, so dass es über die Fläche der Glasplatte 102 als Streulicht flächig abgegeben wird. Es ist auch möglich, über weitere Leuchtdioden auch Licht in die Stirnseite der zweiten Glasplatte 103 einzustrahlen. Wie bei der zuvor beschriebenen Ausführungsvariante fällt natürliches Licht tagsüber durch die im wesentlichen transparente Glasplatte 102 hindurch auf die Solarzellenelemente 108, so dass dort Strom erzeugt wird mittels derer im Beleuchtungszustand die Leuchtmittel 106 gespeist werden können. Da als Leuchtmittel LED's oder dergleichen verwendet werden, haben diese einen sehr geringen Energieverbrauch, bei gleichzeitig hoher Lebensdauer. Durch das Eingießen in die Platine 112 aus einem im wesentlichen transparenten Material sind die Leuchtmittel 106 gegen Witterungseinflüsse und mechanische Einflüsse geschützt. Ein solches sandwichartiges Verbundplattenelement 100 gemäß der Ausführungsvariante nach Figur 3 kann auch aus mehr als zwei Glasplatten bestehen, die im Verbund angeordnet sein können.

## Patentansprüche

1. Sandwichartiges Plattenelement umfassend wenigstens eine erste weitgehend lichtdurchlässig ausgebildete Platte (102) und eine zweite weitgehend lichtdurchlässig ausgebildete Platte (103) sowie weiterhin umfassend Solarzellenelemente (108), die im Zwischenraum zwischen den beiden Platten (102, 103) oder auf wenigstens einer der beiden Platten angeordnet sind, wobei das sandwichartige Plattenelement weiterhin eine Rahmenkonstruktion (104) für die Platten (102, 103) im Randbereich aufweist,
**dadurch gekennzeichnet, dass** eine Beleuchtungseinrichtung mit wenigstens einem Leuchtmittel (106) vorgesehen ist, welches Licht stirnseitig in wenigstens eine der Platten (102, 103) einstrahlt, wobei dieses Licht wenigstens teilweise etwa senkrecht zu dieser Einstrahlrichtung abgelenkt wird und über die Fläche wenigstens einer der Platten, welche lichtdurchlässig ausgebildet ist, abgegeben wird, dadurch, dass diese Platte lichtstreuend wirkt und dazu wenigstens einseitig bedruckt, gesandstrahlt, geätzt, beschichtet oder beklebt ist oder im Inneren der Platte eine Fehlstruktur aufweist.

2. Sandwichartiges Plattenelement nach Anspruch 1, **dadurch gekennzeichnet, dass** die zur flächigen Lichtabgabe ausgebildete Platte (102) und die wenigstens teilweise Solarzellenelemente umfassende Platte (103) bzw. einzelne Solarzellenelemente (108) eine Verbundplatte insbesondere nach Art eines Verbundglases bilden.

3. Sandwichartiges Plattenelement nach einem der Ansprüche 1 oder 2, **dadurch gekennzeichnet, dass** Solarzellenelemente (108) auf wenigstens einer Platte eines einfachen Glases, Kunststoffglases oder Verbundglases angebracht sind.

4. Sandwichartiges Plattenelement nach Ansprüche 1, **dadurch gekennzeichnet, dass** diesesein Isolierglaselement mit wenigstens zwei beabstandeten Platten ist und Solarzellenelemente (108) im Zwischenraum zwischen den beiden Platten oder auf wenigstens einer der beiden Platten angeordnet sind.

5. Sandwichartiges Plattenelement nach einem der Ansprüche 1 bis 3 **dadurch gekennzeichnet, dass** dieses ein Verbundglaselement ist, wobei im Verbund angeordnete Platten wenigstens teilweise Solarzellenelemente aufnehmen und gegebenenfalls eine weitere zu dem Verbundglas beabstandete Platte vorgesehen ist, so dass sich zwischen dieser und dem Verbundglas ein Zwischenraum ergibt, der isolierend wirkt.

6. Sandwichartiges Plattenelement nach einem der Ansprüche 1 bis 5, **dadurch gekennzeichnet, dass** dieses eine Rahmenkonstruktion (104) aufweist, die die Platten (102, 103) sowie gegebenenfalls die Solarzellenelemente (108) wenigstens teilweise im Randbereich einfasst.

7. Sandwichartiges Plattenelement nach einem der Ansprüche 1 bis 6, **dadurch gekennzeichnet, dass** als Leuchtmittel eine Anzahl stirnseitig an der Rahmenkonstruktion angeordneter LED's (106), SMD's oder andere Leuchtdioden oder dergleichen vorgesehen ist.

8. Sandwichartiges Plattenelement nach einem der Ansprüche 1 oder 7, **dadurch gekennzeichnet, dass** wenigstens eine lichtdurchlässige Platte (102) wenigstens einseitig in einem Punktraster (107), Strichraster oder ähnlichem Raster bedruckt ist.

9. Sandwichartiges Plattenelement nach einem der Ansprüche 1 bis 8, **dadurch gekennzeichnet, dass** die Fläche der wenigstens einen lichtdurchlässigen Platte wenigstens einseitig ein durch Sandstrahlen, Ätzen, Beschichten, oder Bekleben mit Partikeln erzeugtes Punktraster, Strichraster oder sonstiges Raster zur Lichtstreuung aufweist.

10. Sandwichartiges Plattenelement nach einem der Ansprüche 1 bis 9, **dadurch gekennzeichnet, dass** die Leuchtmittel auf einer streifenförmigen Anordnung oder auf einer Platine angebracht sind.

11. Sandwichartiges Plattenelement nach einem der Ansprüche 1 bis 10, **dadurch gekennzeichnet, dass** die Leuchtmittel in einen lichtdurchlässigen weitgehend durchsichtigen Kunststoffblock eingegossen sind.

12. Sandwichartiges Plattenelement nach einem der Ansprüche 1 bis 11, **dadurch gekennzeichnet, dass** wenigstens eine lichtdurchlässige Platte aus Glas oder Kunststoffglas besteht.

13. Sandwichartiges Plattenelement nach einem der Ansprüche 1 bis 12, **dadurch gekennzeichnet, dass** Steuereinrichtungen vorgesehen sind, um das oder die Leuchtmittel derart zu steuern, dass sie entweder weißes oder farbiges Licht abgeben.

14. Sandwichartiges Plattenelement nach einem der Ansprüche 1 bis 13, **dadurch gekennzeichnet, dass** Steuereinrichtungen sowie Sensoren vorgesehen sind, die eine Steuerung des oder der Leuchtmittel in Abhängigkeit vom einfallenden Tageslicht, abhängig von einer sich in Nähe des sandwichartigen Plattenelements befindenden Person oder nach einem beliebigen vorgegebenen Programm bewirken.

15. Sandwichartiges Plattenelement nach Anspruch 14, **dadurch gekennzeichnet, dass** als Sensoren wenigstens eine Photozelle und/oder ein Bewegungsmelder vorgesehen ist.

16. Sandwichartiges Plattenelement nach einem der Ansprüche 1 bis 15, **dadurch gekennzeichnet, dass** dieses als Fassadenbauteil ausgebildet ist und Befestigungsmittel aufweist zur Anbringung an einer Gebäudefassade oder Gebäudewand.

17. Sandwichartiges Plattenelement nach einem der Ansprüche 1 bis 16, **dadurch gekennzeichnet, dass** dieses Speichermittel wie Akkumulatoren oder dergleichen aufweist zur Speicherung des in den Solarzellenelementen erzeugten Stroms, um die Leuchtmittel bei Bedarf mit dem gespeicherten Strom zu speisen, oder dass eine Netzeinspeisung des erzeugten Stroms vorgesehen ist.

18. Gebäudefassade oder Gebäudewand, **dadurch gekennzeichnet, dass** diese wenigstens ein sandwichartiges Plattenelement gemäß einem der Ansprüche 1 bis 17 als Fassadenbauteil oder Wandbauteil umfasst.

19. Lichtdurchlässige Decke eines Gebäudes, **dadurch gekennzeichnet, dass** diese wenigstens ein sandwichartiges Plattenelement gemäß einem der Ansprüche 1 bis 17 umfasst, wobei bei diesem sandwichartigen Plattenelement auch die zweite wenigstens teilweise aus Solarzellenelementen bestehende Platte wenigstens teilweise lichtdurchlässig ausgebildet ist.

## Claims

1. Sandwich-like panel element comprising at least a first largely translucent panel (102) and a second largely translucent panel (103), and also comprising solar-cell elements (108) which are arranged in the interspace between the two panels (102, 103) or on at least one of the two panels, the sandwich-like panel element also having a frame structure (104) for the panels (102, 103) in the peripheral region, **characterized in that** there is provided an illuminating device with at least one lighting means (106) which irradiates light at the end side into at least one of the panels (102, 103), this light being deflected, at least in part, approximately perpendicularly to this direction of irradiation and being emitted via the surface area of at least one of the panels, which is of translucent design, **in that** this panel has a light-diffusing action and, for this purpose, is printed, sand-blasted, etched, coated or adhesively coated at least on one side or has a deformed structure in the interior of the panel.

2. Sandwich-like panel element according to Claim 1, **characterized in that** the panel (102), which is designed for emitting light over the surface area, and the panel (103), which comprises solar-cell elements at least in part, and/or individual solar-cell elements (108) form a composite panel, in particular in the manner of laminated glass.

3. Sandwich-like panel element according to either of Claims 1 and 2, **characterized in that** solar-cell elements (108) are fitted on at least one single-glazing, light-admitting-plastic or laminated-glass panel.

4. Sandwich-like panel element according to Claim 1, **characterized in that** it is an insulating-glass element with at least two spaced-apart panels, and solar-cell elements (108) are arranged in the interspace between the two panels or on at least one of the two panels.

5. Sandwich-like panel element according to one of Claims 1 to 3, **characterized in that** it is a laminated-glass element, panels in a composite arrangement accommodating solar-cell elements at least in part, and a further panel which is spaced apart from the laminated glass being provided if appropriate, this resulting in an insulating interspace being produced between this further panel and the laminated glass.

6. Sandwich-like panel element according to one of Claims 1 to 5, **characterized in that** it has a frame structure (104) which surrounds the panels (102, 103) and, if appropriate, the solar-cell elements (108), at least in part, in the peripheral region.

7. Sandwich-like panel element according to one of Claims 1 to 6, **characterized in that** the lighting means provided are a number of LEDs (106), SMDs or other light-emitting diodes or the like arranged on the end side of the frame structure.

8. Sandwich-like panel element according to either of Claims 1 and 7, **characterized in that** at least one translucent panel (102) is printed, at least on one side, with a grid of points (107), grid of lines or a similar grid.

9. Sandwich-like panel element according to one of Claims 1 to 8, **characterized in that** the surface area of the at least one translucent panel has, at least on one side, a grid of points, grid of lines or other light-diffusing grid produced by sand-blasting, etching, coating or adhesive coating with particles.

10. Sandwich-like panel element according to one of Claims 1 to 9, **characterized in that** the lighting means are fitted on a strip-like arrangement or on a printed circuit board.

11. Sandwich-like panel element according to one of Claims 1 to 10, **characterized in that** the lighting means are cast into a translucent, largely transparent plastic block.

12. Sandwich-like panel element according to one of Claims 1 to 11, **characterized in that** at least one translucent panel consists of glass or light-admitting plastic.

13. Sandwich-like panel element according to one of Claims 1 to 12, **characterized in that** control devices are provided in order to control the lighting means such that it or they emits/emit either white or coloured light.

14. Sandwich-like panel element according to one of Claims 1 to 13, **characterized in that** control devices and sensors are provided, with the effect of controlling the lighting means in dependence on the incident daylight, in dependence on a person who is present in the vicinity of the sandwich-like panel element or on the basis of any desired predetermined program.

15. Sandwich-like panel element according to Claim 14, **characterized in that** the sensors provided are at least one photocell and/or a movement sensor.

16. Sandwich-like panel element according to one of Claims 1 to 15, **characterized in that** it is designed as a facade component and has fastening means for fitting it on a building facade or building wall.

17. Sandwich-like panel element according to one of Claims 1 to 16, **characterized in that** it has storage means such as storage batteries or the like for storing the current generated in the solar-cell elements, in order to supply the lighting means, if required, with the stored current, or **in that** provision is made for the generated current to be mains-supplied.

18. Building facade or building wall, **characterized in that** it comprises at least one sandwich-like panel element according to one of Claims 1 to 17, as a facade component or wall component.

19. Translucent ceiling of a building, **characterized in that** it comprises at least one sandwich-like panel element according to one of Claims 1 to 17, this sandwich-like panel element also having the second panel, which comprises solar-cell elements at least in part, designed, at least in part, to be translucent.

## Revendications

1. Elément en plaques du type en sandwich, qui comprend au moins une première plaque (102) configurée de façon à largement laisser passer la lumière et une deuxième plaque (103) configurée de façon à laisser largement passer la lumière, des éléments (108) de cellules photovoltaïques agencés dans l'espace situé entre les deux plaques (102 et 103) ou sur au moins l'une des deux plaques, cet élément en plaques du type en sandwich présentant en outre sur sa bordure une structure de cadre (104) pour les plaques (102 et 103), **caractérisé en ce qu'**est prévue une installation d'éclairage qui comprend au moins un moyen d'éclairage (106) qui projette de la lumière sur le côté frontal d'au moins l'une des plaques (102 et 103), au moins une partie de cette lumière étant déviée à peu près perpendiculairement à la direction d'incidence de la lumière et étant délivrée sur la surface d'au moins l'une des plaques qui est configurée de façon à laisser passer la lumière par le fait que cette plaque disperse la lumière et est, à cet effet, imprimée, sablée, corrodée, recouverte ou collée au moins d'un côté ou présente une structure défectueuse.

2. Elément en plaques du type en sandwich selon la revendication 1, **caractérisé en ce que** la plaque (102) configurée pour délivrer la lumière sur une grande surface, la plaque (103) qui comprend au moins partiellement des éléments de cellules photovoltaïques ou les éléments séparés (108) de cellules photovoltaïques forment une plaque feuilletée en particulier du type en verre feuilleté.

3. Elément en plaques du type en sandwich selon la revendication 1 ou la revendication 2, **caractérisé en ce que** des éléments (108) de cellules photovoltaïques sont posés sur au moins une plaque en verre simple, en verre en matériau synthétique ou en verre feuilleté.

4. Elément en plaques du type en sandwich selon la revendication 1, **caractérisé en ce qu'**il est un élément de verre isolant qui comprend au moins deux plaques distantes l'une de l'autre, des éléments (108) de cellules photovoltaïques étant agencés dans l'espace situé entre les deux plaques ou sur au moins l'une des deux plaques.

5. Elément en plaques du type en sandwich selon l'une quelconque des revendications 1 à 3, **caractérisé en ce qu'**il est un élément de verre feuilleté, les plaques agencées dans le verre feuilleté recevant au moins en partie des éléments de cellules photovoltaïques et une plaque plus éloignée du verre feuilleté étant éventuellement prévue pour former un espace intermédiaire isolant entre cette plaque et le verre feuilleté.

6. Elément en plaques du type en sandwich selon l'une quelconque des revendications 1 à 5, **caractérisé en ce qu'**il présente une structure de cadre (104) qui entoure au moins partiellement les plaques (102 et 103) et éventuellement aussi les éléments (108) de cellules photovoltaïques dans la bordure.

7. Elément en plaques du type en sandwich selon l'une quelconque des revendications 1 à 6, **caractérisé en ce que** des LED (diodes électroluminescentes) (106), des SMD, d'autres diodes d'éclairage ou similaires sont agencées comme moyens d'éclairage sur le côté avant de la structure de cadre.

8. Elément en plaques du type en sandwich selon l'une des revendications 1 ou 7, **caractérisé en ce qu'**une trame (107) de points, de lignes ou similaire est imprimée sur au moins un côté d'au moins une plaque (102) qui laisse passer la lumière.

9. Elément en plaques du type en sandwich selon l'une quelconque des revendications 1 à 8, **caractérisé en ce que** la surface de la ou des plaques qui laissent passer la lumière présente sur au moins un de ses côtés une trame de points, une trame de lignes ou une autre trame obtenue par sablage, par attaque chimique, par revêtement ou par collage d'une couche de particules.

10. Elément en plaques du type en sandwich selon l'une quelconque des revendications 1 à 9, **caractérisé en ce que** les moyens d'éclairage sont prévus sur une platine ou selon un agencement en lignes.

11. Elément en plaques du type en sandwich selon l'une quelconque des revendications 1 à 10, **caractérisé en ce que** les moyens d'éclairage sont coulés dans un bloc de matériau synthétique qui laisse passer la lumière et est largement transparent.

12. Elément en plaques du type en sandwich selon l'une quelconque des revendications 1 à 11, **caractérisé en ce qu'**au moins une plaque qui laisse passer la lumière est constituée de verre ou de verre en matériau synthétique.

13. Elément en plaques du type en sandwich selon l'une quelconque des revendications 1 à 12, **caractérisé en ce que** des installation de commande sont prévues pour commander les moyens d'éclairage de telle manière que ceux-ci délivrent de la lumière blanche ou de la lumière de couleur.

14. Elément en plaques du type en sandwich selon l'une quelconque des revendications 1 à 13, **caractérisé en ce que** des installations de commande et des détecteurs sont prévus pour commander le ou les moyens d'éclairage en fonction de la luminosité naturelle, de la présence d'une personne à proximité des éléments de plaque du type en sandwich ou selon un programme prédéterminé choisi.

15. Elément en plaques du type en sandwich selon la revendication 14, **caractérisé en ce qu'**au moins une cellule photo-électrique et/ou un détecteur de mouvement sont prévus comme détecteurs.

16. Elément en plaques du type en sandwich selon l'une quelconque des revendications 1 à 15, **caractérisé en ce qu'**il est configuré comme élément de construction de façades et **en ce qu'**il présente des moyens de fixation qui permettent de l'installer sur une façade ou sur un mur d'un bâtiment.

17. Elément en plaques du type en sandwich selon l'une quelconque des revendications 1 à 16, **caractérisé en ce qu'**il présente des moyens d'accumulation tels que des accumulateurs ou équivalents pour accumuler le courant produit dans les éléments de cellules photovoltaïques pour approvisionner au besoin les moyens d'éclairage en courant accumulé, ou **en ce qu'**il est prévu d'introduire dans le réseau le courant produit.

18. Façade ou mur de bâtiment **caractérisé en ce qu'**ils comprennent, comme élément de construction, au moins un élément en plaques du type en sandwich selon l'une quelconque des revendications 1 à 17.

19. Plafond de bâtiment qui laisse passer la lumière, **caractérisé en ce qu'**il comprend au moins un élément en plaques du type en sandwich selon l'une quelconque des revendications 1 à 17, la deuxième plaque de cet élément en plaques de type en sandwich, constituée au moins en partie d'éléments de cellules photovoltaïques, étant configurée pour laisser passer la lumière au moins en partie.
